# EUROPEAN PATENT APPLICATION

(11) **EP 4 426 016 A1**
(43) Date of publication of application: **04.09.2024**
(21) Application number: 22897915.9
(22) Date of filing: 25.11.2022
(51) Int. Cl.: H04W 52/02

(54) **CONTROL METHOD FOR INDOOR DISTRIBUTION SYSTEM, AND CHIP, ELECTRONIC DEVICE AND COMPUTER-READABLE STORAGE MEDIUM**

(30) Priority: 26.11.2021 CN 202111424159
(71) Applicant: ZTE Corporation, Shenzhen, Guangdong 518057 (CN)
(72) Inventor: WEI, Ping, Shenzhen, Guangdong 518057 (CN); GUO, Cheng, Shenzhen, Guangdong 518057 (CN); HUANG, Jun, Shenzhen, Guangdong 518057 (CN); ZHOU, Jiangyun, Shenzhen, Guangdong 518057 (CN); WANG, Guozheng, Shenzhen, Guangdong 518057 (CN)
(74) Representative: Canzler & Bergmeier Patentanwälte Partnerschaft mbB
(86) International application number: PCT/CN2022/134260
(87) International publication number: WO 2023/093833

(57) **Abstract**

The present application relates to the technical field of communications, and particularly relates to a control method for an indoor distribution system, and a chip, an electronic device and a computer-readable storage medium. The control method for an indoor distribution system comprises: receiving an uplink signal power of a terminal that is reported by each pico remote radio unit (pRRU) in an indoor distribution system; according to the uplink signal power of the terminal that is reported by each pRRU, determining a home pRRU for the terminal; and only allowing, during scheduling for the terminal, a downlink channel of the home pRRU for the terminal to be enabled.

## Description

### CROSS-REFERENCE TO RELATED APPLICATIONS

This application claims the priority from Chinese Patent Application NO. 202111424159.2, filed on November 26, 2021, the disclosure of which is hereby incorporated by reference in its entirety.

### TECHNICAL FIELD

The present application relates to the technical field of communications, and in particular relates to a control method for an indoor distribution system, and a chip, an electronic device and a computer-readable storage medium.

### BACKGROUND

With the explosive growth of mobile terminals, the indoor distribution system is carrying increasingly higher traffic, which involves higher power consumption. In addition, to offer better services to users, the indoor distribution system is often densely arranged, which may cause interference with neighboring cells, and further affect the performance of the indoor distribution system. Therefore, it is desirable to reduce power consumption of the indoor distribution system and to reduce the interference with neighboring cells.

Current related methods for reducing the energy consumption involves detecting a pico remote radio unit (pRRU) in the indoor subsystem whether has no accessed device or has an accessed terminal with no traffic for a long time, and forcibly powering down the pRRU having such situation, which has a slow response speed and reduced user experience, while adding an additional detection device. For current related methods for reducing interference, some involve deploying antennas of neighboring cells at positions spaced apart by a relatively long distance, which, although enables physical isolation, may cause coverage holes and affect the performance; while others involve reducing transmission powers of edge antennas in the cells, which may affect the experience of a cell user, or involve implementing beam null-forming in the interfered cells, which is difficult to implement in practice.

### SUMMARY

An embodiment of the present application provides a control method for an indoor distribution system, including: receiving uplink signal powers of a terminal reported by respective pRRUs in the indoor distribution system; determining a home pRRU for the terminal according to the uplink signal powers of the terminal reported by the pRRUs; and allowing, during scheduling for the terminal, only a downlink channel of the home pRRU for the terminal to be turned on.

An embodiment of the present application further provides a control method for an indoor distribution system, including: receiving, by each pRRU in the indoor distribution system, a corresponding switch control instruction and controlling a downlink channel of the pRRU to be turned on or off according to the switch control instruction, wherein the switch control instruction for each pRRU is generated through the control method for an indoor distribution system described above, the switch control instruction for a pRRU that is allowed to turn on the downlink channel is an ON instruction, and the switch control instruction for a pRRU that is not allowed to turn on the downlink channel is an OFF instruction.

An embodiment of the present application further provides a chip, including: at least one processing module; and a storage module in communicative connection with the at least one processing module, wherein the storage module stores thereon computer instructions executable by the at least one processing module, which, when executed by the at least one processing module, cause the at least one processing module to implement any control method for an indoor distribution system as described above.

An embodiment of the present application further provides an electronic device, including: at least one processor; and a memory in communicative connection with the at least one processor, wherein the memory stores thereon computer instructions executable by the at least one processor, which, when executed by the at least one processor, cause the at least one processor to implement any control method for an indoor distribution system as described above.

An embodiment of the present application further provides a computer-readable storage medium having a computer program stored thereon which, when executed by a processor, causes any control method for an indoor distribution system as described above to be implemented.

### BRIEF DESCRIPTION OF DRAWINGS

One or more embodiments are illustrated through corresponding figures in the accompanying drawings, but such illustration does not constitute any limitation to the present application.
FIG. 1 is a flowchart of a control method for an indoor distribution system according to an embodiment of the present application;
FIG. 2 is a flowchart of a control method for an indoor distribution system according to an embodiment of the present application;
FIG. 3 is a schematic diagram of a control scenario for an indoor distribution system according to an embodiment of the present application;
FIG. 4 is a schematic diagram of a control scenario for an indoor distribution system according to an embodiment of the present application;
FIG. 5 is a block diagram of a chip according to an embodiment of the present application; and
FIG. 6 is a block diagram of an electronic device according to an embodiment of the present application.

### DETAIL DESCRIPTION OF EMBODIMENTS

As known from the above, although there are some methods for reducing power consumption of the indoor distribution system and some methods for reducing interference with neighboring cells caused by the indoor distribution system, additional devices are required, and it is not concise or efficient.

An embodiment of the present application proposes a control method for an indoor distribution system, including: receiving uplink signal powers of a terminal reported by respective pRRUs in the indoor distribution system; determining a home pRRU for the terminal according to the uplink signal powers of the terminal reported by the pRRUs; and allowing, during scheduling for the terminal, only a downlink channel of the home pRRU for the terminal to be turned on.

According to the control method for an indoor distribution system of the present application, uplink signal powers of a terminal reported by respective pRRUs in the indoor distribution system are received to determine a home pRRU for each terminal, i.e., to establish relation between terminals and pRRUs, so that when one or more terminals are scheduled, the home pRRU(s) corresponding to the scheduled terminal(s) may be determined from several pRRUs, and only the downlink channel(s) of the home pRRU(s) for the terminal(s) is/are turned on to serve the scheduled terminal(s), while the home pRRUs for other terminals not scheduled are not turned on, thereby avoiding resource waste caused by the home pRRUs, which are turned on but not providing a service, for other terminals not scheduled, and avoiding interference with the scheduled terminal(s) by electromagnetic wave signals generated by enabling the home pRRUs for other terminals not scheduled. Therefore, energy consumption of the indoor distribution system can be concisely and effectively reduced without additional devices, and interference with the neighboring cells can be also reduced.

To make the objects, technical solutions and advantages of the embodiments of the present application clearer, embodiments of the present application will be described in detail below with reference to the accompanying drawings. However, it will be appreciated by those of ordinary skill in the art that numerous technical details are set forth in various embodiments of the present application to provide a better understanding of the present application. However, the technical solutions claimed in the present application can be implemented even without these technical details or based on various changes and modifications based on the following embodiments. The following embodiments are divided for convenience of description, and should not constitute any limitation to the specific implementation of the present application, and the embodiments may be mutually incorporated and referred to without contradiction.

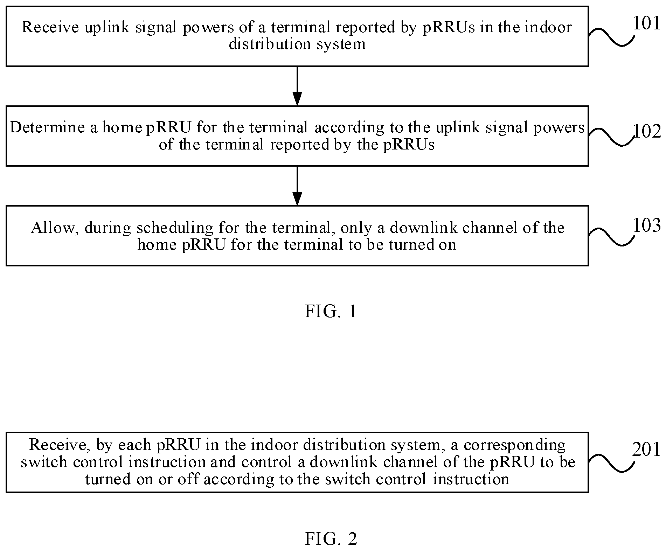

An embodiment of the present application provides a control method for an indoor distribution system, which is applied to a base band unit (BBU) and, as shown in FIG. 1, includes the following operations 101 to 103.

At operation 101, receiving uplink signal powers of a terminal reported by respective pRRUs in the indoor distribution system.

In the control method for an indoor distribution system of the present application, the indoor distribution system is provided with several pRRUs, which have ON/OFF states independent of each other without influence, and which are independent of each other in operation without interference.

In some implementations, a terminal accessed to the indoor distribution system may periodically send sounding reference signal (SRS) to the pRRU, so that each pRRU performs measurement based on the SRS received from the terminal to determine a receiving power, i.e., an uplink signal power, expected by the terminal.

In some implementations, a function switch for SRS measurement may be further provided and turned on before the measurement, and then each pRRU performs measurement based on an SRS received from the terminal to determine the uplink signal power.

It should be noted that the process of the pRRU reporting the uplink signal power is the same as the related power measurement, so that no additional device is needed, and the cost is not increased.

At operation 102, determining a home pRRU for the terminal according to the uplink signal powers of the terminal reported by the pRRUs.

The number of home pRRUs of the terminal is not limited in the control method for an indoor distribution system of the present application, which may be one or more.

It will be appreciated that the magnitude of the signal power affects quality of the received signal, a higher signal power leads to better signal quality, and a lower signal power leads to poorer signal quality. Therefore, the terminal is always expected to use a pRRU with a higher measured uplink signal power for communication. In other words, a pRRU with a higher reported uplink signal power is scheduled and allocated to serve a terminal when the terminal is communicating.

In some implementations, the home pRRU of the terminal may be the pRRU with the highest reported uplink signal power. In other words, in some implementations, determining the home pRRU for the terminal according to the uplink signal powers of the terminal reported by the pRRUs (operation 102) may be implemented by: selecting a highest uplink signal power from the uplink signal powers of the terminal, and taking a pRRU reporting the highest uplink signal power as the home pRRU of the terminal.

It will be further appreciated that considering that the pRRU may suddenly fail, for example, suddenly fail to provide a service or suffer from large interference. In order to provide better services for the terminal, another pRRU reporting a higher uplink signal power may be scheduled to serve the terminal when the optimal pRRU fails. On this basis, the home pRRU may include a plurality of pRRUs.

In some implementations, the home pRRU of the terminal may include a primary pRRU and at least one secondary pRRU. The primary pRRU is the pRRU with the highest reported uplink signal power, and the at least one secondary pRRU includes several pRRUs with higher uplink signal powers other than the primary pRRU. For example, the at least one secondary pRRU may include first n pRRUs other than the primary pRRU among all the pRRUs arranged according to the reported uplink signal power from high to low, where n is a preset positive integer, or the at least one secondary pRRU may include several pRRUs with uplink signal powers slightly different from the uplink signal power reported by the primary pRRU.

To make those skilled in the art better understand the above implementations, the case where the at least one secondary pRRU includes several pRRUs with uplink signal powers slightly different from the uplink signal power reported by the primary pRRU is taken as an example for illustration.

In some implementations, determining the home pRRU for the terminal according to the uplink signal powers of the terminal reported by the pRRUs (operation 102) may be implemented by: selecting a highest uplink signal power from the uplink signal powers of the terminal, and taking a pRRU reporting the highest uplink signal power as a primary pRRU for the terminal, where the home pRRU for the terminal includes the primary pRRU; and if a pRRU satisfying a preset condition other than the primary pRRU is present among the pRRUs, taking the pRRU satisfying the preset condition as a secondary pRRU for the terminal, where the preset condition includes: a difference between the uplink signal power of the terminal reported by the pRRU and the uplink signal power of the terminal reported by the primary pRRU is less than or equal to a first preset threshold, and the home pRRU for the terminal further includes the secondary pRRU.

It should be noted that the first preset threshold may be a fixed value, for example, power P, or the first preset threshold may be a dynamic value, for example, 90% of the uplink signal power reported by the primary pRRU, which is not described in detail here.

It should be further noted that "the difference between the uplink signal power of the terminal reported by the pRRU and the uplink signal power of the terminal reported by the primary pRRU" in the preset condition is a positive value, and to ensure this, "the difference between the uplink signal power of the terminal reported by the pRRU and the uplink signal power of the terminal reported by the primary pRRU" is an absolute value of the difference between the uplink signal power of the terminal reported by the pRRU and the uplink signal power of the terminal reported by the primary pRRU, that is, an absolute value of a difference obtained by subtracting the uplink signal power of the terminal reported by the primary pRRU from the uplink signal power of the terminal reported by the pRRU.

Apparently, the above is merely illustrative, and in the present application, one or more secondary pRRUs may be determined in other manners, and the number of secondary pRRUs and the manner for determining the secondary pRRUs according to the uplink signal power are not limited in the present application or described in detail here.

At operation 103, allowing, during scheduling for the terminal, only a downlink channel of the home pRRU for the terminal to be turned on.

In the control method for an indoor distribution system of the present application, when one or more terminals perform communication based on the indoor distribution system, namely, when one or more terminals are to be scheduled, only downlink channels of the pRRUs for the one or more scheduled terminals are turned on, while other pRRUs in the indoor distribution system are turned off, so that as many pRRUs as possible are turned off without affecting the service provided to the terminals for communication, thereby minimizing the energy consumption, and since other pRRUs are turned off, the interference with the turned on pRRU(s) by other pRRUs is avoided, which is concise and efficient and involves no additional device. Scheduling for the terminal means allowing the terminal to transmit and receive data over an air interface, that is, scheduling corresponding communication resources to provide a communication service for the terminal.

It should be noted that to ensure normal service provision to the terminal and avoid a situation where the service cannot be normally provided when the primary pRRU fails, the downlink channels of the primary pRRU and the secondary pRRU may be turned on at the same time. Particularly, if the home pRRU includes a plurality of secondary pRRUs, downlink channels of only some of the secondary pRRUs may be turned on to better reduce the energy consumption, which is not described in detail here.

It should be further noted that to further reduce the energy consumption, the primary pRRU and the secondary pRRU may be both turned on first, and then only the primary pRRU remains on when the primary pRRU can serve normally, or only the primary pRRU and one secondary pRRU may be turned on, or the like, which is not described in detail here.

It will be appreciated that in a public place with a dense people flow, such as a station, an airport, a school, or the like, where a plurality of terminals are typically included, that is, a plurality of terminals need services provided by an indoor distribution system. When the home pRRUs for some terminals are turned on to provide services for the corresponding terminals, these home pRRUs may be home pRRUs for other terminals which can also use the turned-on pRRUs for communication in practice, so that the pRRUs can be fully utilized, and the energy consumption can be further saved.

In some implementations, when a plurality of terminals are provided, the control method for an indoor distribution system further includes: before allowing, during scheduling for the terminal, only the downlink channel of the home pRRU for the terminal to be turned on (operation 103), determining whether several terminals with the home pRRU satisfying a preset similar condition are present among the plurality of terminals, and if present, taking the several terminals with the home pRRU satisfying the preset similar condition among the plurality of terminals as a same group of terminals. Accordingly, allowing, during scheduling for the terminal, only the downlink channel of the home pRRU for the terminal to be turned on (operation 103) may be implemented by: scheduling the terminals in the same group of terminals within a same scheduling period, and allowing only downlink channels of home pRRUs for the terminals in the same group of terminals to be turned on during scheduling.

It should be noted that, in some implementations, the preset similar condition includes: the home pRRUs of the several terminals include at least one same home pRRU, and an uplink signal power of each terminal reported by the at least one same home pRRU is greater than or equal to the first preset threshold. In the control method for an indoor distribution system of the present application, the preset similar condition further includes a power condition on the basis of the same home pRRU, that is, "an uplink signal power of each terminal reported by the at least one same home pRRU is greater than or equal to the first preset threshold". In this manner, when a plurality of terminals use the same pRRU for communication, the communication quality of the terminals can be better ensured, and avoid accessing too many terminals with relatively poor communication quality. In some implementations, the preset similar condition may further include: a coincidence rate of several pRRUs in the home pRRUs with several pRRUs in the determined home pRRU of the terminals exceeds a second preset threshold, or the like.

Apparently, when a plurality of terminals are provided, the control method for an indoor distribution system may further include: before allowing, during scheduling for the terminal, only the downlink channel of the home pRRU for the terminal to be turned on (operation 103), determining, among the plurality of terminals, whether several terminals having a difference in the uplink signal power with a determined terminal being less than or equal to a third preset threshold are present, or whether several terminals having physical positions near the determined terminal are present, and if present, taking the several terminals and the determined terminal as the same group of terminals. Accordingly, allowing, during scheduling for the terminal, only the downlink channel of the home pRRU for the terminal to be turned on (operation 103) may be implemented by: scheduling the terminals in the same group of terminals within a same scheduling period, and allowing only downlink channels of home pRRUs for the terminals in the same group of terminals to be turned on during scheduling.

In some implementations, in the case of a plurality of terminals, determining the home pRRU for the terminal according to the uplink signal powers of the terminal reported by the pRRUs (operation 102) may be implemented by: selecting a highest uplink signal power from the uplink signal powers of the terminal, and taking a pRRU reporting the highest uplink signal power as a primary pRRU for the terminal, where the home pRRU for the terminal includes the primary pRRU; and if a pRRU satisfying a preset condition other than the primary pRRU is present among the pRRUs, taking the pRRU satisfying the preset condition as a secondary pRRU for the terminal, where the preset condition includes: a difference between the uplink signal power of the terminal reported by the pRRU and the uplink signal power of the terminal reported by the primary pRRU is less than or equal to a first preset threshold, and the home pRRU for the terminal further includes the secondary pRRU.

It will be appreciated that the pRRU may suddenly fail, for example, suddenly fail to provide a service or suffer from large interference. In order to provide better services for the terminal, another pRRU reporting a higher uplink signal power may be scheduled to serve the terminal when the optimal pRRU fails. On this basis, the home pRRU may include a plurality of pRRUs.

In some implementations, the home pRRU of the terminal may include a primary pRRU and at least one secondary pRRU. The primary pRRU is the pRRU with the highest reported uplink signal power, and the at least one secondary pRRU includes several pRRUs with higher uplink signal powers other than the primary pRRU. For example, the at least one secondary pRRU may include first n pRRUs other than the primary pRRU among all the pRRUs arranged according to the reported uplink signal power from high to low, where n is a preset positive integer, or the at least one secondary pRRU may include several pRRUs with uplink signal powers slightly different from the uplink signal power reported by the primary pRRU.

It will be appreciated that a plurality of terminals may be involved in one scheduling, and a scheduling order should be determined for all the terminals to be scheduled currently, so that the terminals are scheduled according to the scheduling order.

The scheduling order may be defined and updated as follows: firstly, very importance person (VIP) terminals or terminals with high priorities among all the terminals to be scheduled are stored into a queue according to a predefined or historical scheduling order; then based on the order of terminals stored in the queue, a terminal having the same primary pRRU as a current terminal is continuously searched in sequence and stored into the queue according to a sequence of the current terminal in the predefined or historical scheduling order, until all the terminals to be scheduled are stored into the queue, and then, the order of storing the terminals into the queue is used as the scheduling order.

Apparently, the above is merely an example of the scheduling order, and the scheduling order may be defined in other manners in practice, for example, based on a time sequence of accessing the indoor distribution system, or the like.

Accordingly, determining whether several terminals with the home pRRU satisfying the preset similar condition are present among the plurality of terminals, and if present, taking the several terminals with the home pRRU satisfying the preset similar condition among the plurality of terminals as the same group of terminals may be implemented by: polling a target terminal according to a scheduling order of the plurality of terminals, and determining, among terminals arranged behind the target terminal, whether a terminal having the same primary pRRU as the target terminal is present; and if present, selecting the terminal having the same primary pRRU as the target terminal as a terminal with the home pRRU satisfying the preset similar condition; and updating a first terminal not selected and arranged behind the target terminal as a new target terminal. A terminal arranged first according to the scheduling order is firstly polled as the target terminal, and the same group of terminals includes the target terminal and a terminal having a similar home pRRU to the target terminal.

Particularly, the terminal includes at least one first terminal and several second terminals; the first terminal has a higher scheduling priority than the second terminals; and the terminals in the same group of terminals are the second terminals. In some implementations, allowing, during scheduling for the terminal, only the downlink channel of the home pRRU for the terminal to be turned on (operation 103) may be further implemented by: scheduling a single first terminal in a single scheduling period, and allowing only a downlink channel of a home pRRU for the first terminal to be turned on during scheduling. The scheduling of the first terminal precedes scheduling of the second terminal. In this manner, when the home pRRUs of the first terminal (such as a VIP terminal) and the second terminal (such as a general terminal) are overlapped, since the VIP terminal has a scheduling priority higher than the general terminal, the VIP terminal will be scheduled preferentially and independently, thereby preventing the general terminal from being scheduled preferentially along with the scheduling of the VIP terminal, that is, avoiding the problem of offering the same service to the VIP terminal and the general terminal.

In this case, allowing, during scheduling for the terminal, only the downlink channel of the home pRRU for the terminal to be turned on (operation 103) needs to further determine how to turn on or off each pRRU in different symbols of one slot. In some implementations, the indoor distribution system is preset with n switch instruction arrays configured to instruct on and off of n pRRUs deployed in the indoor distribution system at each symbol, and then, allowing only the downlink channel of the home pRRU for the terminal to be turned on may be implemented by: setting elements in the switch instruction array for the pRRU to be turned on to 1, and setting elements in the switch instruction array for the pRRU to be turned off to 0, where according to the serial numbers of the pRRUs, a first switch instruction array represents symbols of the pRRUs numbered 1, a second switch instruction array represents symbols of the pRRUs numbered 2 ... an n^{th} switch instruction array represents symbols of the pRRUs numbered n, so that the pRRUs can be turned on or off according to the received switch instruction array.

It should be noted that the generation of the switch instruction arrays may be actually completed by a Pbridge (PB), that is, the control method for an indoor distribution system is completed by the BBU and the PB in cooperation.

Particularly, the indoor distribution system also needs to broadcast messages, and to broadcast system messages periodically, the control method for an indoor distribution system further includes: allowing a downlink channel of each pRRU in the indoor distribution system to be turned on during common signal scheduling, i.e., when messages need to be sent to all terminals within the coverage area of the system. The common signal scheduling is configured for message broadcasting.

An embodiment of the present application provides a control method for an indoor distribution system, which is applied to a pRRU, and, as shown in FIG. 2, includes the following operation 201.

At operation 201, receiving, by each pRRU in the indoor distribution system, a corresponding switch control instruction and controlling a downlink channel of the pRRU to be turned on or off according to the switch control instruction.

The switch control instruction of the pRRU is generated by a control method for an indoor distribution system applied to the BBU, the switch control instruction for a pRRU that is allowed to turn on the downlink channel is an ON instruction, and the switch control instruction for a pRRU that is not allowed to turn on the downlink channel is an OFF instruction.

In some implementations, controlling the downlink channel of the pRRU to be turned on or off according to the switch control instruction includes: if the switch control instruction for the pRRU is the OFF instruction, performing, by the pRRU, at least one of: clearing carrier data of the pRRU, or disabling a downlink antenna of the pRRU. The control method for an indoor distribution system of the present application provides turnoff manners in the aspects of both software and hardware, which can be selected according to the actual requirements.

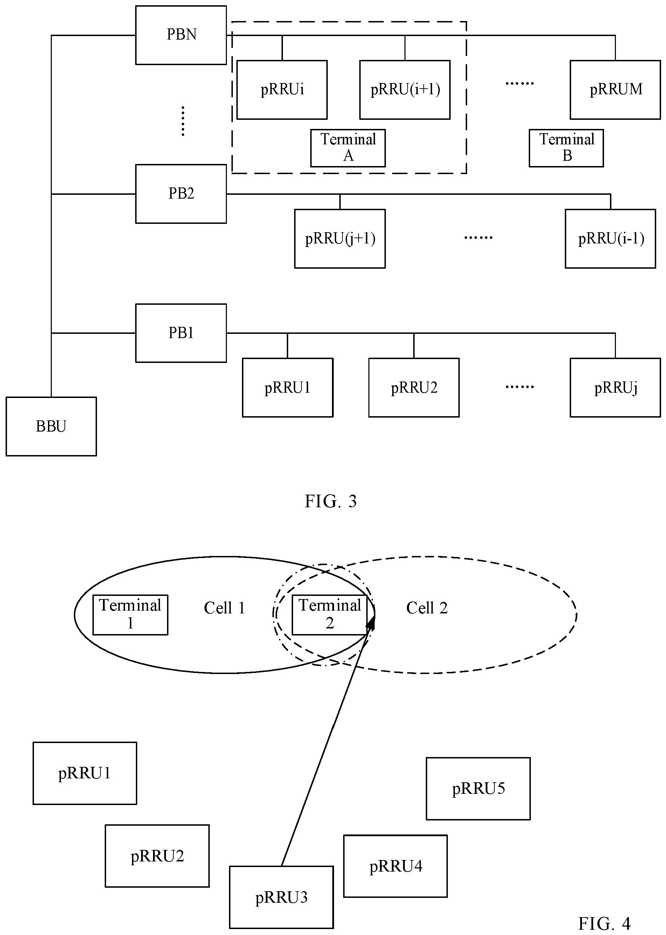

To make those skilled in the art better understand the effect of the above method, the following will describe the effect of reducing energy consumption and interference by taking the scenarios shown in Figs 3 and 4 as examples.

As shown in FIG. 3, the BBU in the indoor distribution system is connected with a plurality of PBs, i.e., PB1 and PB2 ... PBN, each of which is connected with several pRRUs, i.e., pRRU1 and pRRU2 ... pRRUM. At a certain moment, terminal A is a normally scheduled terminal, and terminal B is an unscheduled terminal. In this case, according to the above control method for an indoor distribution system, only the downlink antenna of the pRRU belonging to a terminal is turned on, while the downlink antenna of the pRRU not scheduled for or belonging to a terminal is turned off. That is, only pRRUi and pRRU (i+1) are turned on, while other pRRUs are turned off. The method is more energy-saving compared with the method of turning on all pRRUs.

As shown in FIG. 4, a terminal 1 belongs to a cell 1, a terminal 2 belongs to a cell 2, and the terminal 2 is located in an overlapping interference area between the cell 1 and the cell 2, i.e., an area surrounded by dash-dot lines between the cell 1 and the cell 2. Assuming that the terminal 1 and the terminal 2 are scheduled simultaneously, then the cell 1 may have an interference effect on the terminal 2 according to the related art. In this case, according to the above control method for an indoor distribution system, the terminal 1 of the cell 1 is scheduled away from the overlapping interference area, and pRRU1 and pRRU2 of the cell 1 are turned on, while pRRU3 is turned off, so that in the overlapping interference area, the signal of cell 1 is attenuated, and thus the interference with the terminal 2 is reduced.

In addition, it will be appreciated that the division of operations of any of the above methods is merely for clarity, and in implementations, some of the operations may be combined into one, or a certain operation may be split into a plurality of operations, which both fall into the protection scope of the present application as long as a same logical relationship is included. Any insignificant modification added or any insignificant design introduced to the algorithms or processes without changing core designs of the algorithms or flows falls into the protection scope of the present application.

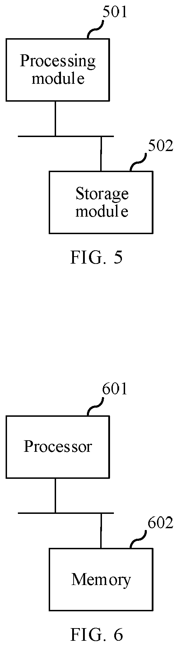

In one aspect, an embodiment of the present application further provides a chip which, as shown in FIG. 5, includes: at least one processing module 501; and a storage module 502 in communicative connection with the at least one processing module 501. The storage module 502 stores thereon computer instructions executable by the at least one processing module 501, which, when executed by the at least one processing module 501, cause the at least one processing module 501 to perform the control method for an indoor distribution system as described above.

In one aspect, an embodiment of the present application further provides an electronic device which, as shown in FIG. 6, includes at least one processor 601; and a memory 602 in communicative connection with the at least one processor 601. The memory 602 stores thereon computer instructions executable by the at least one processor 601, which, when executed by the at least one processor 601, cause the at least one processor 601 to perform the control method for an indoor distribution system as described above.

The memory 602 and the processor 601 are connected via a bus. The bus may include any number of interconnected buses and bridges, and connect various circuits of the at least one processor 601 and the memory 602 together. The bus may also connect various other circuits such as peripherals, voltage regulators, power management circuits, and the like, which are well known in the art and, therefore, will not be described in further details herein. A bus interface provides an interface between the bus and a transceiver. The transceiver may include one or more elements, such as a plurality of receivers and transmitters, to provide a unit for communicating with various other apparatuses over a transmission medium. Data processed by the processor 601 may be transmitted over a wireless medium through an antenna, and in some implementations the antenna further receives data and transmits the data to the processor 601.

The processor 601 is responsible for managing the bus and general processing, and may further provide various functions including timing, peripheral interfaces, voltage regulation, power management, and other control functions. The memory 602 may be configured to store data used by the processor 601 during operation.

It should be noted that in a case where the electronic device is configured to implement the control method for an indoor distribution system applied to the BBU of the present application, the electronic device is a server in the base station, and in a case where the electronic device is configured to implement the control method for an indoor distribution system applied to the pRRU of the present application, the electronic device is a pRRU.

In one aspect, an embodiment of the present application further provides a computer-readable storage medium with a computer program stored thereon. The computer program, when executed by a processor, causes the control method for an indoor distribution system as described above to be implemented.

That is, as will be understood by those skilled in the art, all or part of the operations in the control method for an indoor distribution system described above may be implemented by a program instructing related hardware, where the program is stored in a storage medium and includes several instructions to enable a device (which may be a micro controller unit, a chip, or the like) or a processor to perform all or part of the operations in the method described in the present application. The storage medium mentioned before includes: a U disk, a mobile hard disk, a read-only memory (ROM), a random access memory (RAM), a magnetic or optical disk, or any other medium that can store program codes.

It will be understood by those of ordinary skill in the art that the foregoing embodiments are exemplary embodiments for implementing the present application, and that, in practical applications, various changes in form and details may be made therein without departing from the spirit and scope of the present application.

## Claims

1. A control method for an indoor distribution system, comprising:
receiving uplink signal powers of a terminal reported by respective pico remote radio units, called pRRUs, in the indoor distribution system;
determining a home pRRU for the terminal according to the uplink signal powers of the terminal reported by the pRRUs; and
allowing, during scheduling for the terminal, only a downlink channel of the home pRRU for the terminal to be turned on.

2. The control method for an indoor distribution system according to claim 1, wherein determining the home pRRU for the terminal according to the uplink signal powers of the terminal reported by the pRRUs comprises:
selecting a highest uplink signal power from the uplink signal powers of the terminal, and taking a pRRU reporting the highest uplink signal power as a primary pRRU for the terminal, wherein the home pRRU for the terminal comprises the primary pRRU; and
if a pRRU satisfying a preset condition other than the primary pRRU is present among the pRRUs, taking the pRRU satisfying the preset condition as a secondary pRRU for the terminal, wherein the preset condition comprises: a difference between the uplink signal power of the terminal reported by the pRRU and the uplink signal power of the terminal reported by the primary pRRU is less than or equal to a first preset threshold, and the home pRRU for the terminal further comprises the secondary pRRU.

3. The control method for an indoor distribution system according to claim 1 or 2, wherein a plurality of terminals are provided, and the control method for an indoor distribution system further comprises:
before allowing, during scheduling for the terminal, only the downlink channel of the home pRRU for the terminal to be turned on, determining whether several terminals with the home pRRU satisfying a preset similar condition are present among the plurality of terminals, and if present, taking the several terminals with the home pRRU satisfying the preset similar condition among the plurality of terminals as a same group of terminals, and
allowing, during scheduling for the terminal, only the downlink channel of the home pRRU for the terminal to be turned on comprises:
scheduling the terminals in the same group of terminals within a same scheduling period, and allowing only downlink channels of home pRRUs for the terminals in the same group of terminals to be turned on during scheduling.

4. The control method for an indoor distribution system according to claim 3, wherein determining the home pRRU for the terminal according to the uplink signal powers of the terminal reported by the pRRUs comprises:
selecting a highest uplink signal power from the uplink signal powers of the terminal, and taking a pRRU reporting the highest uplink signal power as a primary pRRU for the terminal, wherein the home pRRU for the terminal comprises the primary pRRU; and
if a pRRU satisfying a preset condition other than the primary pRRU is present among the pRRUs, taking the pRRU satisfying the preset condition as a secondary pRRU for the terminal, wherein the preset condition comprises: a difference between the uplink signal power of the terminal reported by the pRRU and the uplink signal power of the terminal reported by the primary pRRU is less than or equal to a first preset threshold, and the home pRRU for the terminal further comprises the secondary pRRU, and
determining whether several terminals with the home pRRU satisfying the preset similar condition are present among the plurality of terminals, and if present, taking the several terminals with the home pRRU satisfying the preset similar condition among the plurality of terminals as the same group of terminals comprises:
polling a target terminal according to a scheduling order of the plurality of terminals, and determining, among terminals arranged behind the target terminal, whether a terminal having the same primary pRRU as the target terminal is present; and if present, selecting the terminal having the same primary pRRU as the target terminal as a terminal with the home pRRU satisfying the preset similar condition; and updating a first terminal not selected and arranged behind the target terminal as a new target terminal, wherein a terminal arranged first according to the scheduling order is firstly polled as the target terminal, and the same group of terminals comprise the target terminal and a terminal having a similar home pRRU to the target terminal.

5. The control method for an indoor distribution system according to claim 3 or 4, wherein the terminal comprises at least one first terminal and several second terminals, the first terminal has a higher scheduling priority than the second terminals, and the terminals in the same group of terminals are the second terminals.

6. The control method for an indoor distribution system according to claim 5, wherein allowing, during scheduling for the terminal, only the downlink channel of the home pRRU for the terminal to be turned on further comprises:
scheduling a single first terminal in a single scheduling period, and allowing only a downlink channel of the home pRRU for the first terminal to be turned on during scheduling,
wherein the scheduling of the first terminal precedes scheduling of the second terminals.

7. The control method for an indoor distribution system according to claim 3, wherein the preset similar condition comprises: the home pRRUs of the several terminals comprise at least one same home pRRU, and an uplink signal power of each terminal reported by at least one same home pRRU is greater than or equal to a first preset threshold.

8. The control method for an indoor distribution system according to claim 1, further comprises:
allowing a downlink channel of each pRRU in the indoor distribution system to be turned on during common signal scheduling, wherein the common signal scheduling is configured for message broadcasting.

9. A control method for an indoor distribution system, comprising:
receiving, by each pRRU in the indoor distribution system, a corresponding switch control instruction and controlling a downlink channel of the pRRU to be turned on or off according to the switch control instruction,
wherein the switch control instruction for each pRRU is generated in the control method for an indoor distribution system according to any one of claims 1 to 8, the switch control instruction for a pRRU that is allowed to turn on the downlink channel is an ON instruction, and the switch control instruction for a pRRU that is not allowed to turn on the downlink channel is an OFF instruction.

10. The control method for an indoor distribution system according to claim 9, wherein controlling the downlink channel of the pRRU to be turned on or off according to the switch control instruction comprises:
if the switch control instruction for the pRRU is the OFF instruction, the pRRU performs at least one of: clearing carrier data of the pRRU, or disabling a downlink antenna of the pRRU.

11. A chip, comprising:
at least one processing module; and
a storage module in communicative connection with the at least one processing module, wherein
the storage module stores thereon computer instructions executable by the at least one processing module, which, when executed by the at least one processing module, cause the at least one processing module to implement the method according to any one of claims 1 to 10.

12. An electronic device, comprising:
at least one processor; and
a memory in communicative connection with the at least one processor, wherein
the memory stores thereon computer instructions executable by the at least one processor, which, when executed by the at least one processor, cause the at least one processor to implement the method according to any one of claims 1 to 10.

13. A computer-readable storage medium having a computer program stored thereon which, when executed by a processor, causes the method according to any one of claims 1 to 10 to be implemented.
